# FASCICULE DE BREVET EUROPEEN

(11) **EP 1 251 962 B1**
(45) Date de publication et mention de la délivrance du brevet: **23.07.2003**
(21) Numéro de dépôt: 00985427.4
(22) Date de dépôt: 13.12.2000
(51) Int. Cl.: B01J 37/02

(54) **PROCEDE DE FIXATION ET D'IMMOBILISATION D'UN CATALYSEUR SUR UN SUPPORT**
VERFAHREN ZUR FIXIERUNG UND IMMOBILISIERUNG EINES KATALYSATORS AUF EINEM TRÄGER
METHOD FOR FIXING AND IMMOBILISING A CATALYST ON A SUPPORT

(30) Priorité: 12.01.2000 FR 0000355
(43) Date de publication de la demande: 30.10.2002
(73) Titulaire: Ondeo Services, 92000 Nanterre (FR)
(72) Inventeur: BAUDIN, Isabelle, F-92000 Nanterre (FR); SUIDAN, Makram,T., Cincinnati, OH 45249 (US); BALASUBRAMANIAN, Ganesh, Cincinnati, OH 45220 (US); LAINE, Jean-Michel, F-78920 Ecquevilly (FR)
(74) Mandataire: Armengaud Ainé, Alain
(86) Numéro de dépôt international: FR0003507
(87) Numéro de publication internationale: WO01051204

(56) Documents cités:
- EP-A- 0 904 838
- FR-A- 2 505 205
- US-A- 4 341 662

## Description

La présente invention concerne un procédé de fixation d'un catalyseur sur un support permettant de mettre en contact ledit catalyseur, par exemple d'oxydation ou de synthèse, avec des solutions ou des liquides en cours de traitement et d'en assurer une séparation facile après traitement.

Dans FR-A-2760445 la présente titulaire a décrit et revendiqué un procédé de traitement d'eau contenant des micropolluants organiques et des micro organismes qui consiste à effectuer une photocatalyse sur un film d'eau, formé sur une surface sur laquelle on a préalablement fixé une couche mince de photocatalyseur, en présence d'un rayonnement U.V. dirigé sur le film d'eau.

Dans cette publication antérieure on a décrit, pour former le film d'eau, une technique consistant à mettre en rotation des disques recouverts du photocatalyseur, montés sur un axe horizontal et partiellement immergés dans l'eau à traiter. Par leur rotation les disques fixent une fine pellicule d'eau qui est entrainée hors de l'eau. Cette fine pellicule se trouve alors en présence à la fois du photocatalyseur et du rayonnement U.V.

La mise en oeuvre de ce procédé pose le problème de la mise au point d'un procédé efficace de fixation et d'immobilisation du photocatalyseur sur le support en rotation, permettant d'offrir une surface de réaction aussi importante que possible.

Ce problème est résolu par l'invention, étant bien entendu que celle-ci s'applique non seulement à l'invention décrite dans FR-A-2760445 mais également à toute application mettant en oeuvre des catalyseurs immobilisés sur un support.

Selon l'état actuel de la technique, la mise en oeuvre de catalyseurs solides pour la photocatalyse en milieu aqueux peut se faire de diverses manières :
. sous forme de suspensions de poudre fine (de l'ordre de quelques nm), générant de très hautes surfaces spécifiques, et donc de grandes surfaces actives pour la catalyse : l'inconvénient est ici la difficulté de séparation du catalyseur pour récupération et recyclage.
. sous forme de lit filtrant ; cette méthode est d'une grande facilité de mise en oeuvre, il n'y a pas de problème de séparation/récupération du matériau ; dans ce cas cependant, une taille minimale de grains (supérieure au mm) est requise pour éviter un trop fort colmatage du lit et donc une forte perte de charge hydraulique ; conséquence directe de l'augmentation de la taille des particules, la surface de catalyseur active est relativement faible.
. sous forme de poudre ou de grains fixés sur support : cette technique présente l'intérêt de permettre le choix du support adapté au procédé, d'autoriser une mise en oeuvre commode, la séparation du catalyseur et de la phase liquide étant aisée ; par contre, on rencontre de sérieuses difficultés dans la fixation du catalyseur sur le support, spécialement en photocatalyse où les UV oxydent à plus ou moins long terme les liants catalyseurs/support potentiel (adhésifs, résine, colles diverses) ;
. sous forme de dépôt sur support à partir, par exemple, d'une préparation de solution organique de titane (réaction sol/gel) ; l'intérêt de cette technique est de procéder à un dépôt direct sur le support (différents matériaux possibles, résistant à une température de dépôt supérieure à 500°C, par exemple du verre, de l'acier...) et sans qu'il soit besoin de mettre en oeuvre des adhésifs ou autres liants ; le dépôt obtenu par cette technique présente une bonne résistance mécanique et chimique de la couche formée à la surface du support ; l'inconvénient majeur de cette technique est une faible activité de l'oxyde de titane déposé par ce procédé, en raison d'une faible surface spécifique du dépôt formé et, par suite, d'une médiocre « accessibilité » au catalyseur ; on peut, bien sür procéder au dépôt de plusieurs couches successives et accéder, par là, à une meilleure maîtrise de l'épaisseur du dépôt et de sa rugosité, mais sans surmonter complètement les inconvénients précédemment décrits.

En conséquence, pour pallier les inconvénients des solutions selon la technique antérieure, la présente invention apporte un procédé d'immobilisation de catalyseur, notamment de catalyseur d'oxydation ou de synthèse, sur des supports permettant de mettre en contact lesdits catalyseurs avec des solutions ou des liquides en cours de traitement, caractérisé en ce que le dépôt du catalyseur s'effectue par :
- trempage du support dans un mélange fluide de poudre du catalyseur et d'un précurseur dudit catalyseur, c'est-à-dire d'un composé organique complexe de l'élément métallique catalyseur ;
- extraction à vitesse contrôlée du support après immersion dans ledit mélange,
- séchage à température ambiante,
- traitement thermique du support ainsi imprégné du catalyseur dans des conditions assurant l'adhérence dudit catalyseur sur son support.

Selon la présente invention, la vitesse d'extraction du support, après immersion dans ledit mélange, est de l'ordre de 2 à 30 cm.mn⁻¹, de préférence 8 à 18 cm.mn⁻¹.

Comme on le comprend, l'invention telle que spécifié ci-dessus, utilise la technique du «dépôt sol/gel » en mettant en oeuvre des précurseurs de dépôt, par exemple des composés organiques du titane lorsque le catalyseur est TiO₂ ou de tout autre élément métallique catalyseur, et en enrichissant la solution avec de la poudre du catalyseur. Le procédé objet de l'invention combine les avantages du dépôt par réaction sol/gel et ceux découlant de la mise en oeuvre d'un catalyseur sous forme de poudre. Les avantages apportés par l'invention se traduisent notamment par une haute surface spécifique, une forte activité, la stabilité du dépôt sur des supports variés, la facilité de préparation du dépôt. Par ailleurs, selon l'invention, il est possible de réaliser plusieurs dépôts successifs ce qui permet de maîtriser l'épaisseur et la rugosité du dépôt. Un autre avantage apporté par la mise en oeuvre de l'invention réside dans la variété des supports auxquels elle peut s'appliquer : verre, céramiques, métaux, acier ordinaire ou inoxydable, etc... ainsi que dans leur présentation sous forme de plaques, de disques, de billes, etc...

On a décrit ci-après un exemple de mise en oeuvre du procédé selon l'invention, effectué à titre expérimental en laboratoire. Cet exemple de mise en oeuvre est facilement transposable à l'échelle industrielle.

On a commencé par préparer un sol en utilisant de l'isopropoxyde de titane, de l'isopropanol, de la dyéthanolamine et de la poudre de TiO_{2.}

Une solution à 0,5 M d'isopropoxyde de titane dans de l'isopropanol a été préparée et on y a ensuite ajouté une quantité appropriée de diéthanolamine (rapport molaire diéthanolamine/isopropoxyde de titane = 4). On a agité la solution pendant deux heures à la température ambiante, puis on a ajouté de l'eau selon un rapport molaire eau/isopropoxyde = 2. On a ainsi obtenu un sol présentant une viscosité importante.

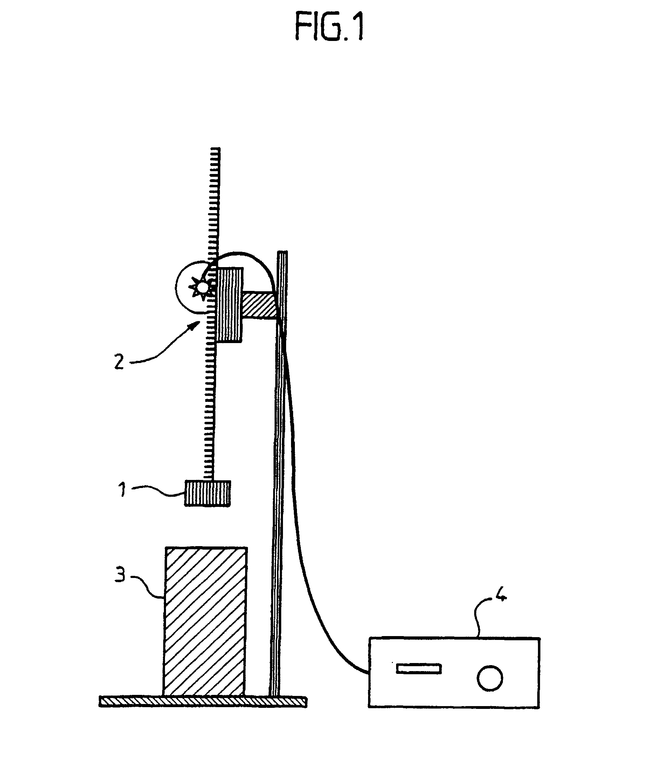

On a ajouté au sol de la poudre de TiO₂ à raison d'une quantité de 30 g/l. Cette addition a été effectuée en agitant vigoureusement le sol tout en ajoutant lentement la quantité mesurée de poudre de TiO_{2.} On a ainsi obtenu un sol-gel enrichi en poudre de TiO_{2.} que l'on a déposé sur un support en acier inoxydable en utilisant le dispositif illustré par la figure 1 des dessins annexés.

Après nettoyage et séchage une plaque 1 en acier inoxydable a été fixée à l'extrémité d'un système d'extraction à crémaillère 2 permettant d'immerger la plaque 1 dans un conteneur rempli de la solution sol-gel préalablement préparée. Le moteur du système à crémaillère était commandé par un mécanisme de contrôle 4 permettant de contrôler la vitesse d'extraction de la plaque 1 après immersion. La vitesse d'extraction était constante et de 12,8 cm par minute. On a obtenu le dépôt d'une pellicule uniforme de sol sur la plaque. Le dépôt a été ensuite séché pendant 24 heures à température ambiante.

La plaque revêtue de la couche de catalyseur a été ensuite soumise à un traitement thermique dans un four dans lequel la température a été augmentée de 3°C par minute jusqu'à 100°C puis maintenue à 100°C pendant une heure. Ensuite la température a été à nouveau augmentée de 3°C par minute jusqu'à atteindre 600°C, valeur qui a été maintenue ensuite pendant une heure. Finalement on a laissé le four se refroidir jusqu'à la température ambiante. On a obtenu un film de TiO₂ sur la plaque support. Le processus de dépôt a été répété plusieurs fois jusqu'à obtenir progressivement des pellicules de TiO₂ présentant l'épaisseur désirée.

On a comparé la plaque ainsi revêtue de catalyseur selon le procédé objet de l'invention à une plaque revêtue du même catalyseur mais obtenue par la mise en oeuvre du procédé selon la technique antérieure sol/gel, sans addition de poudre de TiO₂

Les résultats comparatifs sont donnés dans les deux tableaux suivants :

**Tableau 1**

| Technique antérieure Nombre d'opérations de dépôt | Epaisseur du dépôt en µm |
|---|---|
| 2 | 8 |
| 3 | 10-12 |
| 4 | 15 |
| 8 | 34 |

**Tableau 2**

| Procédé selon l'invention Nombre de dépôts | Epaisseur du dépôt en µm |
|---|---|
| 2 | 70 |
| 3 | 110 |
| 4 | 150 |
| 8 | 300 |

On obtient grâce à l'invention des dépôts beaucoup plus épais dont l'épaisseur est parfaitement contrôlée. Par ailleurs, les essais ont démontré que les dépôts réalisés selon l'invention présentent une dureté bien plus importante que ceux obtenus selon la technique antérieure utilisée.

En ce qui concerne l'activité catalytique, les essais comparatifs effectiués par la titulaire ont fait apparaître clairement que les plaques revêtues d'un dépôt de catalyseur selon le procédé de l'invention présentent une activité bien plus importante (de l'ordre de 2 à 6 fois plus) que les plaques préparées selon la technique antérieure utilisée.

En dehors de ceux déjà précisés ci-dessus, l'invention apporte les avantages suivants :
- le catalyseur, par exemple TiO₂ peut être immobilisé sur une grande variété de supports parmi lesquels on peut citer, l'acier inoxydable, des métaux, des alliages, du verre, des céramiques, des fibres optiques;
- le procédé peut être utilisé pour immobiliser le catalyseur sur toute surface de n'importe quelle forme qui peut venir au contact du sol. Ceci élimine la limitation due à la forme du support que l'on rencontre dans la mise en oeuvre des techniques antérieures;
- le procédé peut être utilisé pour immobiliser n'importe quel catalyseur en poudré : TiO₂, ZnO, MnO₂, Fe₂ O₃, à base de platine, de métaux dopants ou semiconducteurs;
- posssibilité de fixer des catalyseurs de toute granulométrie, porosité;
- mise en oeuvre d'équipements simples et peu coûteux pour le dépôt;
- excellentes caractéristiques mécaniques des dépôts ce qui diminue la périodicité des remplacements du catalyseur;
- excellente activité catalytique qui entraîne une diminution des dimensions des réacteurs notamment des réacteurs utilisés dans la mise en oeuvre du procédé décrit dans FR-A-2760445, le rayonnement UV étant, par ailleurs, utilisé de façon plus efficace ce qui diminue les dépenses en énergie.

Il demeure bien entendu que l'invention n'est pas limitée aux exemples de mise en oeuvre décrits et/ou mentionnés ci-dessus, mais qu'elle en englobe toutes les variantes.

## Revendications

1. Procédé d'immobilisation de catalyseur, notamment de catalyseur d'oxydation ou de synthèse, sur des supports permettant de mettre en contact lesdits catalyseurs avec des solutions ou des liquides en cours de traitement, **caractérisé en ce que** le dépôt du catalyseur s'effectue par :
- trempage du support dans un mélange fluide de poudre du catalyseur et d'un précurseur dudit catalyseur, c'est-à-dire d'un composé organique complexe de l'élément métallique catalyseur ;
- extraction à vitesse contrôlée du support après immersion dans ledit mélange,
- séchage à température ambiante,
- traitement thermique du support ainsi imprégné du catalyseur dans des conditions assurant l'adhérence dudit catalyseur sur son support.

2. Procédé selon la revendication 1, **caractérisé en ce que** l'épaisseur et la rugosité de la couche de catalyseur déposée sur son support sont contrôlées en réalisant plusieurs dépôts successifs.

3. Procédé selon la revendication 1, **caractérisé en ce que** la vitesse d'extraction du support après immersion dans ledit mélange est de l'ordre de 2 à 30 cm.mn⁻¹, de préférence 8 à 18 cm.mn⁻¹.

4. Procédé selon la revendication 1, **caractérisé en ce que** le traitement thermique du support imprégné de catalyseur consiste en un chauffage de 3°C par minute jusqu'à 100°C, un maintien à 100°C pendant une heure, suivi d'un chauffage jusqu'à 600°C pendant une heure et finalement d'un refroidissement jusqu'à la température ambiante.

## Patentansprüche

1. Verfahren zum Immobilisieren von Katalysatoren, insbesondere von Oxidations- oder Synthesekatalysatoren, auf Trägern zum In-Kontakt-Bringen der besagten Katalysatoren mit Lösungen oder Flüssigkeiten im Verlauf ihrer Behandlung, **dadurch gekennzeichnet, dass** die Abscheidung des Katalysators geschieht durch:
- Beschichten des Trägers durch Eintauchen in ein flüssiges Gemisch aus einem Pulver des Katalysators und einem Vorläufer des besagten Katalysators, d. h. einer komplexen organischen Verbindung des metallischen Katalysator-Elements;
- Extraktion des Trägers mit kontrollierter Geschwindigkeit nach seinem Eintauchen in besagtes Gemisch;
- Trocknung bei Umgebungstemperatur;
- Wärmebehandlung des so mit dem Katalysator getränkten Trägers unter Bedingungen, die das Anhaften des Katalysators auf seinem Träger sicherstellen.

2. Verfahren nach Anspruch 1, **dadurch gekennzeichnet, dass** die Dicke und die Rauhigkeit der auf ihrem Träger abgeschiedenen Katalysatorschicht gesteuert werden, indem man mehrere aufeinander folgende Abscheidungen durchführt.

3. Verfahren nach Anspruch 1, **dadurch gekennzeichnet, dass** die Geschwindigkeit der Extraktion des Trägers nach Eintauchen in besagtes Gemisch in der Größenordnung von 2 bis 30 cm/min, vorzugsweise von 8 bis 18 cm/min liegt.

4. Verfahren nach Anspruch 1, **dadurch gekennzeichnet, dass** die Wärmebehandlung des mit dem Katalysator getränkten Trägers besteht in einer Erhitzung um 3 °C pro Minute bis auf 100 °C, einem Halten bei 100 °C während einer Stunde, gefolgt von einer Erhitzung bis auf 600 °C während einer Stunde und schließlich einer Abkühlung bis auf die Umgebungstemperatur.

## Claims

1. Method of immobilising a catalyst, in particular an oxidation or synthesis catalyst, on supports for putting the said catalyst in contact with solutions or liquids during processing, **characterised in that** the catalyst is deposited by:
- soaking the support in a fluid mixture of catalyst powder and of a precursor of the said catalyst, that is to say of a complex organic compound of the metallic catalysing element,
- extracting the support at controlled speed after immersion in the said mixture,
- drying at room temperature,
- heat treatment of the support thus impregnated with the catalyst under conditions ensuring adhesion of the said catalyst to its support.

2. Method according to Claim 1, **characterised in that** the thickness and roughness of the layer of catalyst deposited on its support are controlled by effecting several successive depositions.

3. Method according to Claim 1, **characterised in that** the speed of extraction of the support after immersion in the said mixture is around 2 to 30 cm.min⁻¹, preferably 8 to 18 cm.min⁻¹.

4. Method according to Claim 1, **characterised in that** the heat treatment of the support impregnated with catalyst consists of a heating of 3°C per minute up to 100°C, maintaining at 100°C for one hour, followed by heating up to 600°C for one hour and finally cooling to room temperature.
